# EUROPEAN PATENT SPECIFICATION

(11) **EP 1 172 145 B1**
(45) Date of publication and mention of the grant of the patent: **16.05.2007**
(21) Application number: 01306005.8
(22) Date of filing: 12.07.2001
(51) Int. Cl.: B01J 47/08, B01D 61/48, C02F 1/469

(54) **Electrodeionization apparatus and method of operating the same**
Elektrodeionisierungsvorrichtung und Verfahren zu deren Betrieb
Dispositif d'électrodésionisation et méthode pour faire fonctionner celui-ci

(30) Priority: 13.07.2000 JP 2000213078
(43) Date of publication of application: 16.01.2002
(73) Proprietor: Kurita Water Industries Ltd., Shinjuku-ku Tokyo (JP)
(72) Inventor: Sato, Shin, c/o Kurita Water Industries Ltd., Shinjuku-ku, Tokyo (JP)
(74) Representative: Jenkins, Peter David

(56) References cited:
- US-A- 3 149 061
- US-A- 4 969 983
- US-A- 5 316 637
- US-A- 5 558 753
- US-A- 5 814 197

## Description

The present invention relates to an electrodeionization apparatus for electrically separating ions from water and a method of operating the same.

Electrodeionization apparatuses have been used in the field of pure water and ultra pure water production. A plate and frame type electrodeionization apparatus includes an anode, a cathode, anion-exchange membranes and cation-exchange membranes. The membranes are arranged alternately in such a manner as to alternately form concentrating compartments and desalting compartments (dilution compartments) between the anode and the cathode. The desalting compartments are filled with an ion exchanger such as an ion exchange resin. Raw water, which is to be treated, is introduced into the desalting compartments of the electrodeionization apparatus. Ions contained in the water permeate through the ion exchange membranes into the concentrating compartments.

Japanese patent publication S56-16688B discloses an electrodeionization apparatus comprising a cylindrical casing, electrodes (anodes and cathodes) having a shape of a rod and being arranged parallel with each other, and cylindrical ion-exchange membranes surrounding the respective electrodes. Each ion-exchange membrane defines a concentrating compartment surrounding the electrode so that deionized water flows outside of the respective ion-exchange membranes.

US 3149061, US 558753 and US 5814197, also each describe electrodeionisation apparatus.

In this conventional electrodeionization apparatus, concentrated water from the concentrating compartments surrounding the anodes and concentrated water from the concentrating compartments surrounding the cathodes are mixed and circulated to the respective concentrating compartments.

According to such a conventional electrodeionization apparatus, it is difficult to remove silica at a high removal rate due to diffusion of silica from the concentrating compartments. For instance, when the electrodeionization apparatus is operated under conditions in which the feed water contains a silica concentration of 200 parts per billion (ppb) and the overall product water recovery from the apparatus is 90%, water flowing the concentrating compartments contains a high silica concentration about 2000 ppb. As a result, the silica diffuses from the concentrating compartments to the desalting compartments at a high rate, thus, the silica concentration in the product water flowing out of the apparatus fails to become sufficiently low.

It is an object of the present invention to provide an electrodeionization apparatus and method which overcomes the foregoing problems.

It is a further object of the present invention to provide an electrodeionization apparatus which restrains the diffusion of silica from the concentrating compartments, producing product water with an extremely low silica concentration.

The present invention provides a method according to claim 1. Embodiments of the method are defined in claims 2 to 17.

In order to produce product water containing silica at a concentration of 0.1 ppb or less, the concentrated water flowing out of the concentrating compartment contains silica preferably at a concentration of less than 100 ppb, more preferably less than 70ppb.

In an embodiment of the invention, the electrodeionization apparatus has a plurality of concentrating compartments along the flow direction of water in the desalting compartment, and the concentrated water flowing out of the concentrating compartment which is located at the most downstream side in regard to the desalting compartment has the silica concentration less than 1000 times as great as that of the product water. According to this aspect of the present invention, the gradient of silica concentration from the concentrating compartment to the desalting compartment is small even near the outlet of the concentrating compartment, so that silica is restricted to diffuse from the concentrating compartment to the desalting compartment, and the product water contains silica at an extremely low concentration.

In another embodiment of the invention, the number of the concentrating compartments is n (n is an integer of 2 or more), i.e. first through n-th concentrating compartments are provided along the flow direction of water in the desalting compartment, a part of concentrated water flowing out of the first concentrating compartment is discharged and the remainder of the concentrated water is circulated into the first concentrating compartment, a part of concentrated water flowing out the k-th (2 ≤ k ≤ n) concentrating compartment is supplied to the (k-1)-th compartment just ahead of the k-th compartment and the remainder of the concentrated water is circulated into the k-th concentrating compartment, and a part of the product water is supplied to the n-th concentrating compartment which is located at the most downstream side in regard to the desalting compartment. According to this aspect of the present invention, the silica concentration is reduced sufficiently in the concentrated water in the concentrating compartment nearest the outlet and in the product water.

Water to be added to the concentrating compartment can be supplied to a feed line connected to the concentrating compartment. Instead thereof, the water can be supplied directly to the concentrating compartment.

The present invention also provides an electrodeionization apparatus according to claim 18. Embodiments of the apparatus are defined in claims 19 to 21.

According to one embodiment, the electrodeionization apparatus has a supplyer which supplies a part of the product water to the n-th concentrating compartment. The product water may be fed to the concentrating compartment directly or to a line for feeding the concentrated water to the n-th concentrating compartment.

The electrodeionization apparatus may have a flow line or lines which discharges a part of concentrated water flowing out of the first concentrating compartment, circulates the remainder thereof into the first concentrating compartment, supplies a part of the concentrated water flowing out of the k-th (2 ≤ k ≤ n) concentrating compartment to the (k-1)-th concentrating compartment, and circulates the remainder of thereof into the k-th concentrating compartment.

Each desalting compartment may be packed with an ion exchanger such as ion exchange resin or ion exchange fiber. The concentrating compartment may be packed with an ion exchanger or activated carbon. The number "n" is preferably 2 to 10, more preferably 2 to 5 most preferably 2 to 4. Other aspects of the invention will be described later with the preferred embodiments.

An electrodeionization apparatus according to another embodiment of the invention has the concentrating compartments arranged such that said concentrated water flows in the concentrating compartments along a direction crossing the flow direction in the desalting compartment.

The above, and other objects, features and advantages of the present invention will become apparent from the following description read in conjunction with the accompanying drawings, in which like reference numerals designate the same elements.
Embodiments of the present invention will now be described by way of example only, with reference to the accompanying drawings, in which:-

Fig. 1 is a schematic sectional view showing an electrodeionization apparatus according to an embodiment of the present invention.
Fig. 2 is a schematic diagram showing flow of water in an electrodeionization system according to another embodiment of the present invention.
Fig. 3a is a perspective view schematically showing an electrodeionization apparatus according to another embodiment of the present invention.
Fig. 3b is a schematic diagram of the apparatus of Fig. 3a.
Fig. 4 is a schematic diagram of a comparative example.

The preferred embodiments and examples are described hereinafter, but the invention is not limitative thereto.

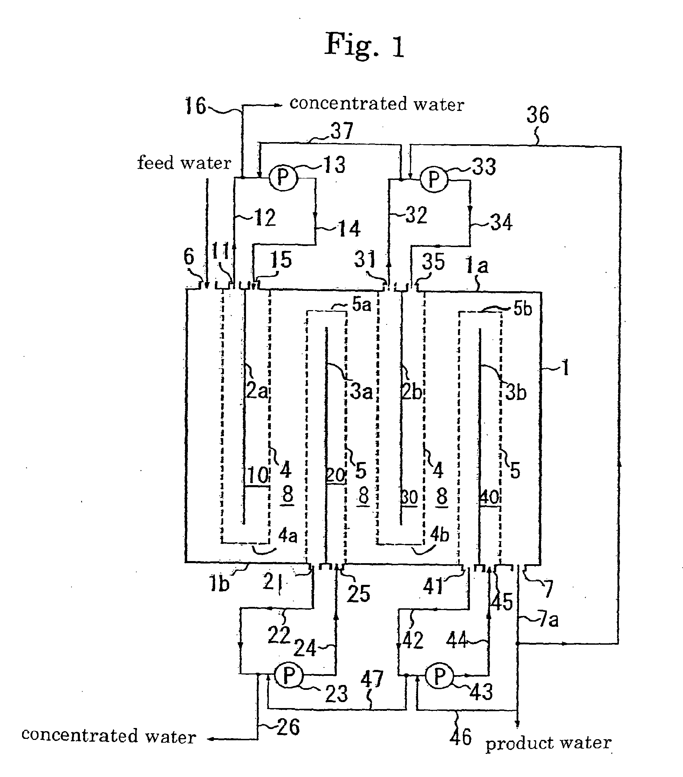

Fig. 1 is a schematic sectional top view showing an electrodeionization apparatus according to a first embodiment of the present invention. In a casing 1 of the apparatus, anodes 2a, 2b and cathodes 3a, 3b, each preferably having a shape of a plate, are alternately arranged substantially parallel to each other. In this embodiment, anodes 2a, 2b are supported by one side wall 1a of casing 1 such that the ends of anodes 2a, 2b are spaced apart from the other side wall 1b. Cathodes 3a, 3b are supported by the other side wall 1b of casing 1 such that the ends of cathodes 3a, 3b are spaced apart from the one side wall 1a.

Each of anodes 2a, 2b are surrounded by an anion-exchange membrane 4 so that a first concentrating compartment 10 is defined by anion-exchange membrane 4 surrounding anode 2a, and a third concentrating compartment 30 is defined by anion-exchange membrane 4 surrounding anode 2b. Each of cathodes 3a, 3b is surrounded by a cation-exchange membrane 5 so that a second concentrating compartment 20 is defined by cation-exchange membrane 5 surrounding cathode 3a, and a fourth concentrating compartment 40 is defined by cation-exchange membrane 5 surrounding cathode 3b.

Casing 1 is provided with inlets 15, 35 and outlets 11, 31 such that concentrated water is introduced into a space at one side of each anode 2a, 2b in each concentrating compartment 10, 30 and is discharged from the other side.

Casing 1 is provided with inlets 25, 45 and outlets 21, 41 such that concentrated water is introduced into a space at one side of each cathode 3a, 3b in each concentrating compartment 20, 40 and is discharged from the other side.

Casing 1 is further provided with an inlet 6, for introducing feed water at a left side (as shown in Fig. 1), and with an outlet 7, for discharging deionized product water at a right side (as shown in Fig. 1). Product water is removed through a pipe 7a connected to outlet 7.

A desalting compartment 8, in which water to be treated flows, is defined between anion-exchange membranes 4 and cation-exchange membranes 5 in casing 1. Desalting compartment 8 is packed with an ion exchanger such as ion exchange resin. The concentrating compartments may be packed with an ion exchanger.

For circulating concentrated water through concentrating compartments 10, 20, 30, and 40, outlet 11 and inlet 15 are connected to each other via a pipe 12, a pump 13, and a pipe 14. Outlet 21 and inlet 25 are connected to each other by a pipe 22, a pump 23, and a pipe 24. Outlet 31 and inlet 35 are connected to each other by a pipe 32, a pump 33, and a pipe 34. Outlet 41 and the inlet 45 are connected to each other by a pipe 42, a pump 43, and a pipe 44.

For adding product water supplementarily into the circulated concentrated water in concentrating compartments 30, 40 located near product water outlet 7, pipes 36, 46, as branches of pipe 7a, are connected to pipes 32, 42, respectively.

For supplying a part of circulated concentrated water of concentrating compartment 30, flowing through pipe 32 into concentrating compartment 10, pipe 32 is connected to pipe 12 through a pipe 37. For supplying a part of circulated concentrated water of concentrating compartment 40, flowing through pipe 42 into concentrating compartment 20, pipe 42 is connected to pipe 22 through a pipe 47.

Pipes 12, 22 are provided, as their branches, with pipes 16, 26, respectively, for discharging concentrated water.

The feed water to be treated is fed through inlet 6 into desalting compartment 8, flows around end 4a of anion-exchange membrane 4 surrounding anode 2a, enters into the portion defined between anion-exchange membrane 4 and cation-exchange membrane 5, and flows around end 5a of cation-exchange membrane 5, surrounding cathode 3a. Then, the water to be treated further flows around ends 4b, 5b of ion-exchange membranes 4, 5, surrounding anode 2b, and cathode 3b, in order, and then flows out through product water outlet 7.

During treatment, the water flowing in desalting compartment 8 in this way, anions and cations contained in the water to be treated permeate anion-exchange membranes 4 and cation-exchange membranes 5, respectively, so as to enter into the first through fourth concentrating compartments 10, 20, 30, and 40. Concentrated water flows in concentrating compartments 10, 20, 30, and 40. The ions, i.e. anions and cations, enter into the concentrated water in the respective concentrating compartments and are finally discharged from pipes 16, 26 through pipes 12, 22 connected to the concentrating compartments 10, 20, respectively.

The concentrated water flowing out of concentrated water outlet 41 of cathodic concentrating compartment 40 circulates through pipe 42, pump 43, and pipe 44. During flowing operation, a part of product water is supplied to pipe 42 from pipes 7a and 46. A part of the concentrated water in pipe 42 flows into pipe 22 connected to concentrating compartment 20 via pipe 47. While the concentrated water taken out of concentrated water outlet 21 of cathodic concentrating compartment 20 circulates through pipe 22, pump 23, and pipe 24, a part of the circulating concentrated water is discharged from pipe 26, and a part of the concentrated water in circulating pipe 42 enters into pipe 22 through pipe 47.

While the concentrated water taken out of concentrated water outlet 31 of anodic concentrating compartment 30 circulates through pipe 32, pump 33, and pipe 34, a part of the product water is supplied to pipe 32 from pipes 7a and 36. A part of concentrated water in the pipe 32 flows into pipe 12, connected to concentrating compartment 10 via pipe 37. While the concentrated water taken out of concentrated water outlet 11 of anodic concentrating compartment 10 circulates through pipe 12, pump 13, and pipe 14, a part of circulating concentrated water is discharged from pipe 16, and a part of the concentrated water in circulating pipe 32 enters into pipe 12 through pipe 37.

As described above, since the product water is introduced from pipe 7a into concentrating compartments 30, 40 near the product water outlet, the silica concentrations in concentrating compartments 30, 40 are reduced so as to be less than 1000 times as great as that of the product water. Therefore, the concentration gradients from concentrating compartments 30, 40 to desalting compartment 8 are also reduced, thus restricting the diffusion of silica from concentrating compartments 30, 40 to desalting compartment 8. As a result, final product water containing extremely low silica concentration obtained from pipe 7a.

The apparatus shown in Fig.1 has two anodic concentrating compartments and two cathodic concentrating compartments, but it may employ more compartments.

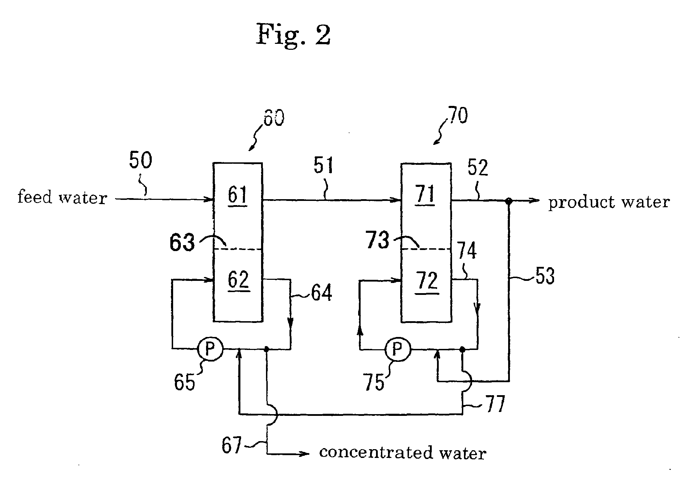

Fig. 2 is a schematic diagram showing flow of water in the electrodeionization system according to another embodiment of the present invention. This system comprises two electrodeionization apparatuses 60, 70.

Electrodeionization apparatuses 60, 70 have desalting compartments 61, 71 and concentrating compartments 62, 72, defined by ion-exchange membranes 63, 73, respectively. Feed water, to be treated, is introduced into desalting compartment 61 of electrodeionization apparatus 60 through a pipe 50 and is desalted or treated. After that, the treated water is introduced into desalting compartment 71 of electrodeionization apparatus 70 through a pipe 51 and is again desalted or treated. Final product water is taken out from desalting compartment 71 through a pipe 52. A pipe 53 is branched from pipe 52, providing a part of the product water into a pipe 74 for circulating concentrated water.

Electrodeionization apparatus 60 is provided at its concentrating compartment 62 with a concentrated water outlet and a concentrated water inlet which are connected by a pipe 64 for circulation. A pump 65 is disposed on the path of pipe 64. Electrodeionization apparatus 70 is provided at its concentrating compartment 72 with a concentrated water outlet and a concentrated water inlet which are connected by pipe 74 for circulation. A pump 75 is disposed on the path of pipe 74. A part of final product water is introduced to pipe 74 of electrodeionization apparatus 70 of downstream side through pipe 53 branched from pipe 52. A part of concentrated water in pipe 74, connected to concentrating compartment 72, is introduced into pipe 64 of electrodeionization apparatus 60 through a pipe 77. A part of concentrated water in pipe 64, connected to concentrating compartment 62, is discharged through pipe 67.

Referring to the electrodeionization system shown in Fig. 2, while the concentrated water in concentrating compartment 72 is circulated through pipe 74, a part of final product water is supplied to pipe 74 and 53. Therefore, the silica concentration of concentrating compartment 72 is reduced to be less than 1000 times as great as that of the product water. This results in a reduction in the concentration gradients from concentrating compartment 72 to desalting compartment 71, thus restricting the diffusion of silica from concentrating compartment 72 to desalting compartment 71. As a result, final product water containing extremely low silica concentration is obtained from pipe 52.

Each apparatus shown in Figs. 1 and 2 is operated under the following conditions:
feed water containing a silica concentration 200 ppb;
the flow rate of the feed water to be supplied to desalting compartment 8 or 61 being 1.1 t/h (tons per hour);
the amount of concentrated water to be circulated in each concentrating compartment 10, 20, 30, 40, 62, 72 being 1 t/h;
the amount of concentrated water to be taken out from the concentrated water circulating line being 0.1 t/h; and
the amount of product water to be introduced to concentrated water circulating pipe 32, 42, 74 being 0.1 t/h.

Under the above conditions, the silica concentration in concentrating compartment 30, 40, 72 is approximately 40 ppb and silica concentration in concentrating compartment 10, 20, 62 is approximately 2000 ppb. That is, the concentration gradients from concentrating compartment 30, 40, 72 to the desalting compartment is significantly decreased. Thus, the silica concentration of final product water becomes less than 0.1 ppb.

The apparatus shown in Fig.2 employs two electrodeionizationes, but it may employ more electrodeionizationes connected in series.

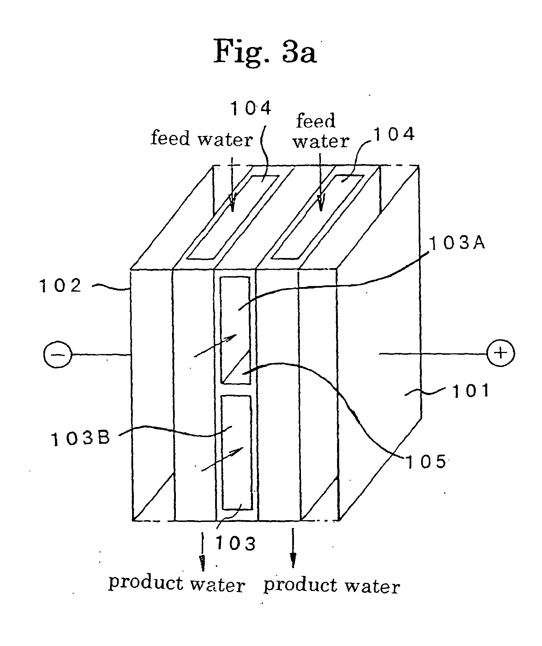

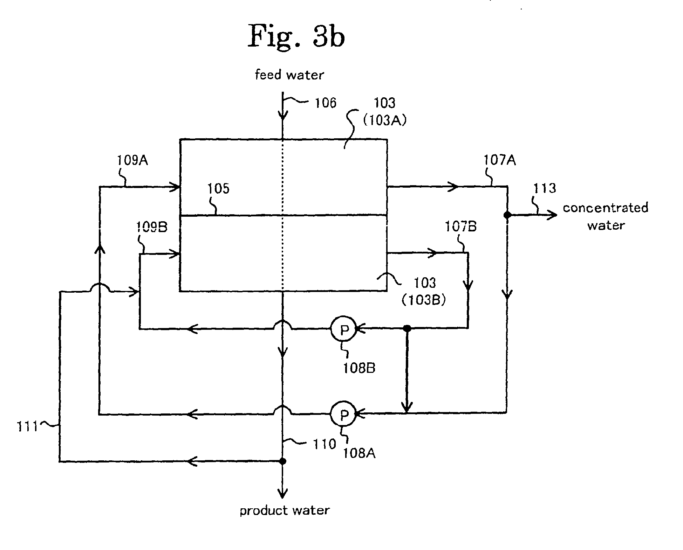

Fig. 3a is a perspective view schematically showing an electrodeionization apparatus according to another embodiment, Fig. 3b is a schematic diagram showing the flow of water in this apparatus.

Referring to Figs. 3a and 3b, an electrodeionization apparatus has an anode 101 and a cathode 102. Cation-exchange membranes and anion-exchange membranes are alternately arranged between anode 101 and cathode 102 to define a concentrating compartment 103 and desalting compartments 104.

In this embodiment, concentrating compartment 103 is arranged at the center between anode 101 and cathode 102. Desalting compartments 104 are arranged on the anode side and the cathode side of concentrating compartment 103, respectively. Feed water, to be treated, is supplied to desalting compartments 104 through a pipe 106. After the feed water is desalted, product water is taken out through a pipe 110.

Concentrating compartment 103 is divided into two concentrated water flowing sections 103A, 103B by a partition 105. The flowing direction of concentrated water in each concentrated water flowing section 103A, 103B crosses, preferably substantially perpendicularly to, the flowing direction in desalting compartments 104. The term "substantially perpendicular" is defined to mean "at an angle between about 80 -100°". Each desalting compartment 104 has an inlet at the top and an outlet at the bottom (as shown in Fig. 3a) so that water to be treated flows downwardly in a vertical direction.

Concentrating compartment 103 is provided with partition 105. Partition 105, extending in a direction substantially perpendicular to the vertical direction as the flowing direction in desalting compartments 104, forms concentrated water flowing section 103A and concentrated water flowing section 103B on the upper and lower sides with reference to partition 105, respectively, in concentrating compartment 103.

Hereinafter, concentrated water flowing section 103A, near the inlets of desalting compartments 104 is referred to as "upstream concentrating compartment 103A". Likewise, concentrated water flowing section 103B, near the outlets of desalting compartments 104, is referred to as "downstream concentrating compartment 103B".

The concentrated water outlet and the concentrated water inlet of upstream concentrating compartment 103A are connected through a circulating pipe 107A, a pump 108A, and a pipe 109A. The concentrated water outlet and the concentrated water inlet of downstream concentrating compartment 103B are connected through a circulating pipe 107B, a pump 108B, and a pipe 109B. The concentrated water in downstream concentrating compartment 103B circulates through a circulating pipe 107B, a pump 108B, and a pipe 109B, in this order. A part of final product water is introduced to concentrated water flowing pipe 109B, from a product water pipe 110, through a supply water pipe 111 branched from product water pipe 110. A part of the concentrated water flowing through pipe 107B, from downstream concentrating compartment 103B, is introduced into pipe 107A to upstream concentrating compartment 103A through a pipe 112. A part of the concentrated water flowing out from upstream concentrating compartment 103A is discharged through a pipe 113.

Since a part of final product water is introduced to the concentrated water circulating through downstream concentrating compartment 103B and pipes 107B, 109B, the silica concentration of concentrated water in downstream concentrating compartment 103B is reduced to less than 1000 times as great as that of the product water. Thus, the concentration gradient from concentrating compartment 103B to desalting compartment 104 is also reduced. Therefore, the diffusion of silica from concentrating compartment 103B to desalting compartments 104 is restricted. As a result, final product water containing extremely low silica concentration is obtained from pipe 110.

The present invention will be described in further detail with reference to the following examples and comparative examples.

### Example 1

Experiment conditions were as follows. Feed water to be supplied was service water which had been first filtered with activated carbon, deionized by reverse osmosis, and further filtered with deaerating membranes. The feed water contained a silica concentration of 400 ppb. The water was supplied in the method of present invention shown in Fig. 2. Desalting compartments of an electrodeionization apparatus were filled with ion exchange resins consisting of a mixture of ion exchange resin "650C" manufactured by Dow Chemical Co., and ion exchange resin "SSA10" manufactured by Mitsubishi Chemical Corporation, in a ratio of 4 : 6. Ion-exchange membranes were CMB and AHA manufactured by Tokuyama Corporation. As for a downstream electrodeionization apparatus, a concentrating compartment was filled with the same ion exchange resins as mentioned above. The size of the desalting compartment was 187 mm in width × 795 mm in height × 2.5 mm in thickness. One electrodeionization apparatus has three desalting compartments. The feed water was supplied at a flow rate of about 80 l/h (liters per hour). The overall product water recovery from each apparatus was 90%. The voltage was 21V.

As for operation under these conditions, the silica concentration of concentrated water flowing out from the concentrating compartment of the downstream electrodeionization apparatus and the silica concentration of final product water were measured and the results are shown in Table 1.

### Comparative Example 1

An experiment was operated under the same conditions as Example 1 except that silica solution is added through an inlet for a concentrating compartment of a downstream electrodeionization apparatus to make the silica concentration to be 220 ppb. The silica concentration of final product water was measured and the results are shown in Table 1.

### Comparative Example 2

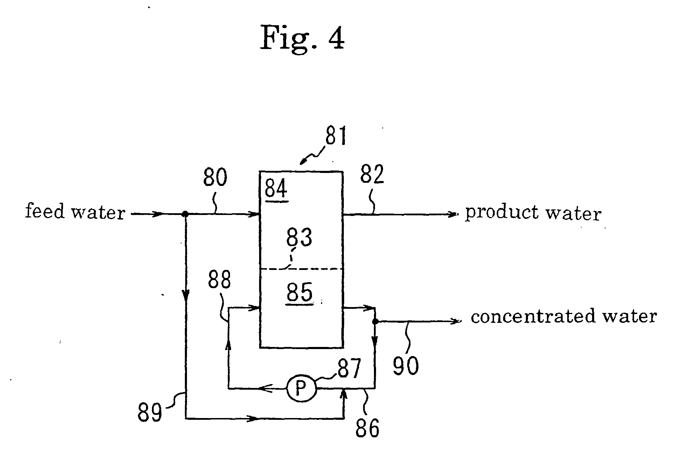

An experiment was operated under the same conditions as Example 1 except using an apparatus shown in Fig. 4. The silica concentration of final product water was measured and the results are shown in Table 1.

In the apparatus shown in Fig. 4, feed water is supplied to a desalting compartment 84 of electrodeionization apparatus 81 through a pipe 80 and is taken out as product water through a pipe 82. Electrodeionization apparatus 81 is provided with and divided by an ion-exchange membrane 83 so as to form desalting compartment 84 and a concentrating compartment 85. The concentrated water outlet and the concentrated water inlet of concentrating compartment 85 are connected through a circulating pipe 86, a pump 87, and a pipe 88. Feed water is supplemented to pipe 86 through a pipe 89, branched from feed water supply pipe 80. A part of the concentrated water flowing through pipe 86, from concentrating compartment 85, is discharged through pipe 90.

**TABLE 1**

| | Silica concentration of concentrated water in downstream electrodeionization apparatus [ppb] | Silica concentration of product water [ppb] |
|---|---|---|
| Example 1 | 80 | <0.1 |
| Comparative Example 1 | 220 | 0.2 |
| Comparative Example 2 | 4000 | 3.8 |

### Example 2

The system shown in Fig.2 was operated where the flow rate in the desalting compartment and the mixing ratio of the cation exchange resin and the anion exchange resin were the same as in Example 1. The desalting compartment has a conduit length of 3200mm. As a result of operation, the concentrated water flowing out of outlet 41 had a silica concentration of 40ppb, and the product water had a silica concentration of less than 0.1ppb.

### Example 3

The system shown in Fig.3 was operated where the flow rate in the desalting compartment and the mixing ratio of the cation exchange resin and the anion exchange resin are the same as in Example 1. The concentrated water flowing out of concentrating compartment 103B to line 107 had a silica concentration of 80ppb. The product water had a silica concentration of less than 0.1ppb.

As described above, the electrodeionization apparatus and its operating method produces deionized water containing extremely low silica concentration of 0.1ppb or less.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A method of operating an electrodeionization apparatus, said electrodeionization apparatus comprising at least one anode (2a, 2b, 101), at least one cathode (3a, 3b, 102), and ion-exchange membranes (4, 5, 63, 73) which are arranged to form at least one concentrating compartment (10, 20, 30, 40, 62, 72, 103A, 103B) and at least one desalting compartment (8, 61, 71, 104) between the anode and the cathode, comprising:
introducing concentrated water into said concentrating compartment;
supplying feed water into said desalting compartment; and
taking out product water from said desalting compartment; **characterised in that**:
a part of the product water is supplied to said concentrating compartment such that concentrated water flowing out of said concentrating compartment has a concentration of silica less than 1000 times as great as that of the product water.

2. A method of operating an electrodeionization apparatus as claimed in claim 1, wherein said concentrated water flowing out of said concentrating compartment has a silica concentration of less than 100ppb.

3. A method of operating an electrodeionization apparatus as claimed in claim 1, wherein:
a plurality concentrating compartments are provided along a flow direction of water in said desalting compartment; and
said concentrated water flowing out of said concentrating compartment which is located at the most downstream side has a silica concentration less than 1000 times as great as that of the product water.

4. A method of operating an electrodeionization apparatus as claimed in claim 3, wherein:
the number of said plurality of concentrating compartments is n, wherein n is an integer of at least 2, so that a first through n-th concentrating compartments are provided along the flow direction of water in said desalting compartment;
a part of the concentrated water flowing out said first concentrating compartment is discharged and the remainder of the concentrated water is circulated to said first concentrating compartment;
a part of the concentrated water flowing out the k-th concentrating compartment, wherein 2 ≤ k ≤ n, is supplied to the (k-1)-th compartment just ahead of the k-th compartment and the remainder of the concentrated water is circulated to the k-th concentrating compartment; and
a part of the product water is supplied to the n-th concentrating compartment, which is located at the most downstream desalting compartment.

5. A method of operating an electrodeionization apparatus as claimed in claim 4, wherein n is an integer from 2 to 10.

6. A method of operating an electrodeionization apparatus as claimed in claim 4, wherein n is an integer from 2 to 5.

7. A method of operating an electrodeionization apparatus as claimed in claim 4, wherein n is an integer from 2 to 4.

8. A method of operating an electrodeionization apparatus as claimed in claim 4, wherein said desalting compartment is packed with an ion exchanger.

9. A method of operating an electrodeionization apparatus as claimed in claim 8, wherein said ion exchanger is at least one of ion exchange resin and ion exchange fiber.

10. A method of operating an electrodeionization apparatus as claimed in claim 1, wherein said concentrating compartment is packed with an ion exchanger.

11. A method of operating an electrodeionization apparatus as claimed in claim 1, wherein said concentrating compartment is packed with an activated carbon.

12. A method of operating an electrodeionization apparatus as claimed in claim 1, wherein the concentrated water flowing out of the concentrating compartment has a silica concentration less than 700 times as great as that of the product water.

13. A method of operating an electrodeionization apparatus as claimed in claim 1, wherein a plurality of the electrodeionization apparatuses are provided, whereby the water to be deionized flows through the electrodeionization apparatuses in series, and the concentrated water flowing out of the most downstream electrodeionization apparatus has a silica concentration less than 1000 times as great as that of the product water taken out of the most downstream electrodeionization apparatus.

14. A method of operating an electrodeionization apparatus as claimed in claim 13, wherein:
the number of said plurality of concentrating compartments is n, wherein n is an integer of at least 2, so that a first through n-th concentrating compartments are provided;
a part of the concentrated water flowing out said first concentrating compartment is discharged and the remainder of the concentrated water is circulated to said first concentrating compartment;
a part of the concentrated water flowing out the k-th concentrating compartment, wherein 2 ≤ k ≤ n, is supplied to the (k-1)-th compartment just ahead of the k-th compartment and the remainder of the concentrated water is circulated to the k-th concentrating compartment; and
a part of the product water is supplied to the n-th concentrating compartment, which is located at the most downstream desalting compartment.

15. A method of operating an electrodeionization apparatus as claimed in claim 13, wherein n is 2.

16. A method of operating an electrodeionization apparatus as claimed in claim 1, wherein:
the cation-exchange membranes and the anion-exchange membranes are arranged alternatively between said anode and said cathode to form said concentrating compartment and said desalting compartment; and
said concentrating compartment is divided into a plurality of concentrated water flowing sections by a partition extending along a direction crossing to the flowing direction in said desalting compartment, whereby the concentrated water flows in said concentrated water flowing sections along the direction crossing the flow direction in said desalting compartment.

17. A method of operating an electrodeionization apparatus as claimed in claim 16, wherein:
the number of said plurality of concentrating compartments is n, wherein n is an integer of at least 2, so that a first through n-th concentrating compartments are provided along the flow direction of water in said desalting compartment;
a part of the concentrated water flowing out said first concentrating compartment is discharged and the remainder of the concentrated water is circulated to said first concentrating compartment;
a part of the concentrated water flowing out the k-th concentrating compartment, wherein 2 ≤ k ≤ n, is supplied to the (k-1)-th compartment just ahead of the k-th compartment and the remainder of the concentrated water is circulated to the k-th concentrating compartment;
a part of the product water is supplied to the n-th concentrating compartment, which is located at the most downstream desalting compartment; and
wherein the concentrated water flowing out of the n-th compartment has a silica concentration of 1000 times as great as that of the product water.

18. An electrodeionization apparatus comprising:
at least one anode (2a, 2b, 101);
at least one cathode (3a, 3b, 102);
ion-exchange membranes (4, 5, 63, 73) arranged between said anode and said cathode; and
concentrating compartments (10, 20, 30, 40, 62, 72, 103A, 103B) and at least one desalting compartment (8, 61, 71, 104) being defined by said ion-exchange membranes,
said concentrating compartments consisting of first through n-th concentrating compartments from the most upstream side to the most downstream side with respect to said desalting compartment; and **characterised in that** it comprises a flow line (36, 46, 53, 111) for supplying a part of the output of said desalting compartment to said n-th concentrating compartment.

19. An electrodeionization apparatus as claimed in claim 18, further comprising:
a flow line for discharging a part of the output from said first concentrating compartment and circulating the reminder of said output into said first concentrating compartment; and
a flow line for supplying a part of the output from the k-th concentrating compartment, wherein 2 ≤ k ≤ n, to the (k-1)-th concentrating compartment and circulating the remainder of said output into the k-th concentrating compartment.

20. An electrodeionization apparatus according to claim 18 having a plurality of electrodeionization sub-apparatuses connected in series, the number of said plurality of electrodeionization sub-apparatuses being n, n being an integer of at least 2, each of said electrodeionization sub-apparatus comprising:
at least one anode,
at least one cathode, and
ion-exchange membranes arranged between said anode and said cathode;
concentrating compartments and at least one desalting compartment being defined by said ion-exchange membranes;
a flow line for supplying a part of the output of said desalting compartment to the concentrating compartment of the n-th electrodeionization sub-apparatus;
a flow line for discharging a part of the output of said concentrating compartment of said first electrodeionization sub-apparatus and circulating the reminder of said output into said concentrating compartment of said first electrodeionization sub-apparatus; and
a flow line for supplying a part of the output from said concentrating compartment of the k-th electrodeionization sub-apparatus, wherein 2 ≤ k ≤ n, to the concentrating compartment of the (k-1)-th electrodeionization sub-apparatus and circulating the remainder of said output into said concentrating compartment of said k-th electrodeionization sub-apparatus.

21. An electrodeionization apparatus according to claim 18 or 19:
wherein said concentrating compartments are arranged such that said concentrated water flows in said concentrating compartments along a direction crossing the flow direction in said desalting compartment.

## Patentansprüche

1. Verfahren zum Betreiben einer Elektrodeionisationsvorrichtung, wobei die Elektrodeionisationsvorrichtung wenigstens eine Anode (2a, 2b, 101), wenigstens eine Kathode (3a, 3b, 102) und Ionenaustauschmembranen (4, 5, 63, 73) umfasst, die so angeordnet sind, dass sie wenigstens eine Konzentrationskammer (10, 20, 30, 40, 62, 72, 103A, 103B) und wenigstens eine Entsalzungskammer (8, 61, 71, 104) zwischen der Anode und der Kathode bilden, wobei das Verfahren umfasst:
Einleiten von konzentriertem Wasser in die Konzentrationskammer;
Zuführen von Speisewasser zu der Entsalzungskammer; und
Entnehmen von Reinwasser aus der Entsalzungskammer,
**dadurch gekennzeichnet, dass**:
ein Teil des Reinwassers der Konzentrationskammer so zugeführt wird, dass konzentriertes Wasser, das aus der Konzentrationskammer ausströmt, eine Konzentration von Silikat hat, die weniger als 1000 mal so groß ist wie die des Reinwassers.

2. Verfahren zum Betreiben einer Elektrodeionisationsvorrichtung nach Anspruch 1, wobei das konzentrierte Wasser, das aus der Konzentrationskammer ausströmt, eine Silikatkonzentration von weniger als 100ppb hatte.

3. Verfahren zum Betreiben einer Elektrodeionisationsvorrichtung nach Anspruch 1, wobei:
eine Vielzahl von Konzentrationskammern in einer Strömungsrichtung von Wasser in der Entsalzungskammer vorhanden sind; und
das konzentrierte Wasser, das aus der Konzentrationskammer ausströmt, die sich an der am weitesten stromab liegenden Seite befindet, eine Silikatkonzentration hat, die weniger als 1000 mal so groß ist wie die des Reinwassers.

4. Verfahren zum Betreiben einer Elektrodeionisationsvorrichtung nach Anspruch 3, wobei:
die Anzahl der Vielzahl von den Konzentrationskammern n beträgt, wobei n eine ganze Zahl von wenigstens 2 ist, so dass eine erste bis n-te Konzentrationskammer in der Strömungsrichtung von Wasser in der Entsalzungskammer vorhanden sind;
ein Teil des konzentrierten Wassers, das aus der Konzentrationskammer ausströmt, abgeleitet wird und der Rest des konzentrierten Wassers zu der ersten Konzentrationskammer zirkuliert wird;
ein Teil des konzentrierten Wassers, das aus der k-ten Konzentrationskammer ausströmt (wobei 2 ≤ k ≤ n), der (k - 1)-ten Kammer unmittelbar vor der k-ten Kammer zugeführt wird und der Rest des konzentrierten Wassers zu der k-ten Konzentrationskammer zirkuliert wird und
ein Teil des Reinwassers der n-ten Konzentrationskammer zugeführt wird, die sich an der am weitesten stromab liegenden Entsalzungskammer befindet.

5. Verfahren zum Betreiben einer Elektrodeionisationsvorrichtung nach Anspruch 4, wobei n eine ganze Zahl von 2 - 10 ist.

6. Verfahren zum Betreiben einer Elektrodeionisationsvorrichtung nach Anspruch 4, wobei n eine ganze Zahl von 2 - 5 ist.

7. Verfahren zum Betreiben einer Elektrodeionisationsvorrichtung nach Anspruch 4, wobei n eine ganze Zahl von 2 - 4 ist.

8. Verfahren zum Betreiben einer Elektrodeionisationsvorrichtung nach Anspruch 4, wobei die Entsalzungskammer mit einem lonenaustauscher gefüllt ist.

9. Verfahren zum Betreiben einer Elektrodeionisationsvorrichtung nach Anspruch 8, wobei der Ionenaustauscher wenigstens einen lonenaustauschharz hat oder eine lonenaustauschfaser ist.

10. Verfahren zum Betreiben einer Elektrodeionisationsvorrichtung nach Anspruch 1, wobei die Konzentrationskammer mit einem Ionenaustauscher gefüllt ist.

11. Verfahren zum Betreiben einer Elektrodeionisationsvorrichtung nach Anspruch 1, wobei die Konzentrationskammer mit Aktivkohle gefüllt ist.

12. Verfahren zum Betreiben einer Elektrodeionisationsvorrichtung nach Anspruch 1, wobei das konzentrierte Wasser, das aus der Konzentrationskammer ausströmt, eine Silikatkonzentration hat, die weniger als 700 mal so groß ist wie die des Reinwassers.

13. Verfahren zum Betreiben einer Elektrodeionisationsvorrichtung nach Anspruch 1, wobei eine Vielzahl der Elektrodeionisationsvorrichtungen vorhanden sind, so dass das zu deionisierende Wasser in Reihe durch die Elektrodeionisationsvorrichtungen fließt und das konzentrierte Wasser, das aus der am weitesten stromab liegenden Elektrodeionisationsvorrichtung ausströmt, eine Silikatkonzentration hat, die weniger als 1000 mal so groß ist wie die des Reinwassers, das aus der am weitesten stromabliegenden Elektrodeionisationsvorrichtung entnommen wird.

14. Verfahren zum Betreiben einer Elektrodeionisationsvorrichtung nach Anspruch 13, wobei
die Anzahl der Vielzahl von Konzentrationskammern n beträgt, wobei n eine ganze Zahl von wenigstens 2 ist, so dass eine erste bis n-te Konzentrationskammer vorhanden sind;
ein Teil des konzentrierten Wassers, das aus der ersten Konzentrationskammer ausströmt, abgeleitet wird und der Rest des konzentrierten Wassers zu der ersten Konzentrationskammer zirkuliert wird;
ein Teil des konzentrierten Wassers, das aus der k-ten Konzentrationskammer ausströmt (wobei 2 ≤ k ≤ n), der (k - 1)-ten Kammer unmittelbar vor der k-ten Kammer zugeführt wird und der Rest des konzentrierten Wassers zu der k-ten Konzentrationskammer zirkuliert wird und
ein Teil des Reinwassers der n-ten Konzentrationskammer zugeführt wird, die sich an der am weitesten stromab liegenden Entsalzungskammer befindet.

15. Verfahren zum Betreiben einer Elektrodeionisationsvorrichtung nach Anspruch 13, wobei n 2 beträgt.

16. Verfahren zum Betreiben einer Elektrodeionisationsvorrichtung, wobei
die Kationen-Austauschmembranen und die Anionen-Austauschmembranen abwechselnd zwischen der Anode und der Kathode angeordnet sind, um die Konzentrationskammer und die Entsalzungskammer zu bilden und
die Konzentrationskammer durch eine Trennwand, die sich in einer Richtung erstreckt, die die Strömungsrichtung in der Entsalzungskammer schneidet, in eine Vielzahl von Strömungsabschnitten für konzentriertes Wasser unterteilt ist, so dass das konzentrierte Wasser in den Strömungsabschnitten für konzentriertes Wasser in der Richtung strömt, die die Strömungsrichtung in der Entsalzungskammer schneidet.

17. Verfahren zum Betreiben einer Elektrodeionisationsvorrichtung nach Anspruch 16, wobei
die Anzahl der Vielzahl von Konzentrationskammern n beträgt, wobei n eine ganze Zahl von wenigstens 2 ist, so dass eine erste bis n-te Konzentrationskammer in der Strömungsrichtung von Wasser in der Entsalzungskammer vorhanden sind;
ein Teil des konzentrierten Wassers, das aus der ersten Konzentrationskammer ausströmt, abgeleitet wird und der Rest des konzentrierten Wassers zu der ersten Konzentrationskammer zirkuliert wird;
ein Teil des konzentrierten Wasser, das aus der k-ten Konzentrationskammer ausströmt (wobei 2 ≤ k ≤ n), der (k - 1)-ten Kammer unmittelbar vor der k-ten Kammer zugeführt wird und der Rest des konzentrierten Wassers zu der k-ten Konzentrationskammer zirkuliert wird;
ein Teil des Reinwassers der n-ten Konzentrationskammer zugeführt wird, die sich an der am weitesten stromab liegenden Entsalzungskammer befindet und
wobei das konzentrierte Wasser, das aus der n-ten Kammer ausströmt, eine Silikatkonzentration hatte, die 1000 mal so groß ist wie die des Reinwassers.

18. Elektrodeionisationsvorrichtung, die umfasst:
wenigstens eine Anode (2a, 2b, 101);
wenigstens eine Kathode (3a, 3b, 102);
lonenaustauschmembranen (4, 5, 63, 73), die zwischen der Anode und der Kathode angeordnet sind; und
Konzentrationskammern (10, 20, 30, 40, 62, 72, 103A, 103B) und wenigstens eine Entsalzungskammer (8, 61, 71, 104), die durch die lonenaustauschmembranen gebildet werden;
wobei die Konzentrationskammern aus einer ersten bis n-ten Konzentrationskammer von der am weitesten stromauf liegenden Seite bis zu der am weitesten stromab liegenden Seite in Bezug auf die Entsalzungskammer bestehen;
und **dadurch gekennzeichnet, dass**
sie eine Strömungsleitung (36, 46, 53, 111) zum Zuführen eines Teils des Ausstoßes der Entsalzungskammer zu der n-ten Konzentrationskammer umfasst.

19. Elektrodeionisationsvorrichtung nach Anspruch 18, die des Weiteren umfasst:
eine Strömungsleitung zum Ableiten eines Teils des Ausstoßes von der ersten Konzentrationskammer und zum Zirkulieren des Rests des Ausstoßes in die erste Konzentrationskammer und
eine Strömungsleitung zum Zuführen eines Teils des Ausstoßes von der k-ten Konzentrationskammer (wobei 2 ≤ k ≤ n) zu der (k - 1)-ten Konzentrationskammer und zum Zirkulieren des Rests des Ausstoßes zu der k-ten Konzentrationskammer.

20. Elektrodeionisationsvorrichtung nach Anspruch 18, die eine Vielzahl von Elektrodeionisations-Teilvorrichtungen aufweist, die in Reihe verbunden sind, wobei die Anzahl der Vielzahl von Elektrodeionisations-Teilvorrichtungen n beträgt und n eine ganze Zahl von wenigstens 2 ist und jede der Elektrodeionisations-Teilvorrich-tungen umfasst:
wenigstens eine Anode,
wenigstens eine Kathode, und
Ionenaustauschmembranen, die zwischen der Anode und der Kathode angeordnet sind;
Konzentrationskammern und wenigstens eine Entsalzungskammer, die durch die lonenaustauschmembranen gebildet werden;
eine Strömungsleitung zum Zuführen eines Teils des Ausstoßes der Entsalzungskammer zu der Konzentrationskammer der n-ten Elektrodeionisations-Teil-vorrichtung;
eine Strömungsleitung zum Ableiten eines Teils des Ausstoßes der Konzentrationskammer der ersten Elektrodeionisations-Teilvorrichtung und zum Zirkulieren des Rests des Ausstoßes zu der Konzentrationskammer der ersten Elektrodeionisations-Teilvorrichtung und
eine Strömungsleitung zum Zuführen eines Teils des Ausstoßes von der Konzentrationskammer der k-ten Elektrodeionisations-Teilvorrichtung (wobei 2 ≤ k ≤ n) zu der Konzentrationskammer der (k - 1)-ten Elektrodeionisations-Teilvorrichtung und zum Zirkulieren des Rests des Ausstoßes zu der Konzentrationskammer der k-ten Elektrodeionisations-Teilvorrichtung.

21. Elektrodeionisations-Vorrichtung nach Anspruch 18 oder 19, wobei die Konzentrationskammern so angeordnet sind, dass das konzentrierte Wasser in den Konzentrationskammern in einer Richtung strömt, die die Strömungsrichtung in der Entsalzungskammer schneidet.

## Revendications

1. Procédé de conduite d'un dispositif d'électrodésionisation, ledit dispositif d'électrodésionisation comprenant au moins une anode (2a, 2b, 101), au moins une cathode (3a, 3b, 102) et des membranes échangeuses d'ions (4, 5, 63, 73) qui sont disposées pour former au moins un compartiment de concentration (10, 20, 30, 40, 62, 72, 103A, 103B) et au moins un compartiment de dessalage (8, 61, 71, 104) entre l'anode et la cathode, comprenant :
l'introduction d'eau concentrée à l'intérieur dudit compartiment de concentration,
l'approvisionnement en eau d'alimentation à l'intérieur dudit compartiment de dessalage, et
l'extraction de l'eau produite dudit compartiment de dessalage, **caractérisé en ce que** :
une partie de l'eau produite est fournie audit compartiment de concentration de telle sorte que l'eau concentrée sortant dudit compartiment de concentration présente une concentration de silice moins de 1 000 fois supérieure à celle de l'eau produite.

2. Procédé de conduite d'un dispositif d'électrodésionisation selon la revendication 1, dans lequel ladite eau concentrée sortant dudit compartiment de concentration présente une concentration de silice inférieure à 100 ppb.

3. Procédé de conduite d'un dispositif d'électrodésionisation selon la revendication 1, dans lequel :
une pluralité de compartiments de concentration sont prévus le long d'une direction d'écoulement de l'eau dans ledit compartiment de dessalage, et
ladite eau concentrée sortant dudit compartiment de concentration, qui est situé du côté le plus en aval, présente une concentration de silice moins de 1 000 fois supérieure à celle de l'eau produite.

4. Procédé de conduite d'un dispositif d'électrodésionisation selon la revendication 3, dans lequel :
le nombre de ladite pluralité de compartiments de concentration est n, où n est un nombre entier d'au moins 2, de sorte qu'un premier à un n^{ième} compartiments de concentration sont prévus le long de la direction d'écoulement de l'eau dans ledit compartiment de dessalage,
une partie de l'eau concentrée sortant dudit premier compartiment de concentration est évacuée et le reste de l'eau concentrée est mis en circulation dans ledit premier compartiment de concentration,
une partie de l'eau concentrée sortant du k^{ième} compartiment de concentration, où 2 ≤ k ≤ n est fournie au (k-1)^{ième} compartiment juste en avant du k^{ième} compartiment et le reste de l'eau concentrée est mis en circulation dans le k^{ième} compartiment de concentration, et
une partie de l'eau produite est fournie au n^{ième} compartiment de concentration, qui est situé au niveau du compartiment de dessalage le plus en aval.

5. Procédé de conduite d'un dispositif d'électrodésionisation selon la revendication 4, dans lequel n est un nombre entier de 2 à 10.

6. Procédé de conduite d'un dispositif d'électrodésionisation selon la revendication 4, dans lequel n est un nombre entier de 2 à 5.

7. Procédé de conduite d'un dispositif d'électrodésionisation selon la revendication 4, dans lequel n est un nombre entier de 2 à 4.

8. Procédé de conduite d'un dispositif d'électrodésionisation selon la revendication 4, dans lequel ledit compartiment de dessalage est muni d'un échangeur d'ions.

9. Procédé de conduite d'un dispositif d'électrodésionisation selon la revendication 8, dans lequel ledit échangeur d'ions est au moins un élément parmi une résine échangeuse d'ions et une fibre échangeuse d'ions.

10. Procédé de conduite d'un dispositif d'électrodésionisation selon la revendication 1, dans lequel ledit compartiment de concentration est muni d'un échangeur d'ions.

11. Procédé de conduite d'un dispositif d'électrodésionisation selon la revendication 1, dans lequel ledit compartiment de concentration est muni d'un charbon actif.

12. Procédé de conduite d'un dispositif d'électrodésionisation selon la revendication 1, dans lequel l'eau concentrée sortant du compartiment de concentration présente une concentration de silice moins de 700 fois supérieure à celle de l'eau produite.

13. Procédé de conduite d'un dispositif d'électrodésionisation selon la revendication 1, dans lequel une pluralité des dispositifs d'électrodésionisation sont prévus, grâce à quoi l'eau devant être désionisée circule à travers les dispositifs d'électrodésionisation en série, et l'eau concentrée sortant du dispositif d'électrodésionisation le plus en aval présente une concentration de silice moins de 1 000 fois supérieure à celle de l'eau produite extraite du dispositif d'électrodésionisation le plus en aval.

14. Procédé de conduite d'un dispositif d'électrodésionisation selon la revendication 13, dans lequel :
le nombre de ladite pluralité de compartiments de concentration est n, où n est un nombre entier d'au moins 2, de sorte qu'un premier à un n^{ième} compartiments de concentration sont prévus,
une partie de l'eau concentrée sortant dudit premier compartiment de concentration est évacuée et le reste de l'eau concentrée est mis en circulation dans ledit premier compartiment de concentration,
une partie de l'eau concentrée sortant du k^{ième} compartiment de concentration, où 2 ≤ k ≤ n est fournie au (k-1)^{ième} compartiment juste en avant du k^{ième} compartiment et le reste de l'eau concentrée est mis en circulation dans le k^{iéme} compartiment de concentration, et
une partie de l'eau produite est fournie au n^{ième} compartiment de concentration, qui est situé au niveau du compartiment de dessalage le plus en aval.

15. Procédé de conduite d'un dispositif d'électrodésionisation selon la revendication 13, où n est égal à 2.

16. Procédé de conduite d'un dispositif d'électrodésionisation selon la revendication 1, dans lequel :
les membranes échangeuses de cations et les membranes échangeuses d'anions sont agencées alternativement entre ladite anode et ladite cathode pour former ledit compartiment de concentration et ledit compartiment de dessalage, et
ledit compartiment de concentration est séparé en une pluralité de sections d'écoulement d'eau concentrée par une séparation s'étendant le long d'une direction croisant la direction d'écoulement dans ledit compartiment de dessalage, grâce à quoi l'eau concentrée circule dans lesdites sections d'écoulement d'eau concentrée le long de la direction croisant la direction d'écoulement dans ledit compartiment de dessalage.

17. Procédé de conduite d'un dispositif d'électrodésionisation selon la revendication 16, dans lequel :
le nombre de ladite pluralité de compartiments de concentration est n, où n est un nombre entier d'au moins 2, de sorte qu'un premier à un n^{ième} compartiments de concentration sont prévus le long de la direction d'écoulement de l'eau dans ledit compartiment de dessalage,
une partie de l'eau concentrée sortant dudit premier compartiment de concentration est évacuée et le reste de l'eau concentrée est mis en circulation dans ledit premier compartiment de concentration,
une partie de l'eau concentrée sortant du k^{ième} compartiment de concentration, où 2 ≤ k ≤ n, est fournie au (k-1)^{ième} compartiment juste en avant du k^{ième} compartiment et le reste de l'eau concentrée est mis en circulation dans le k^{ième} compartiment de concentration,
une partie de l'eau produite est fournie au n^{ième} compartiment de concentration, qui est situé au niveau du compartiment de dessalage le plus en aval, et
dans lequel l'eau concentrée sortant du n^{ième} compartiment présente une concentration de silice supérieure à 1 000 fois celle de l'eau produite.

18. Dispositif d'électrodésionisation comprenant :
au moins une anode (2a, 2b, 101),
au moins une cathode (3a, 3b, 102),
des membranes échangeuses d'ions (4, 5, 63, 73) disposées entre ladite anode et ladite cathode, et
des compartiments de concentration (10, 20, 30, 40, 62, 72, 103A, 103B) et au moins un compartiment de dessalage (8, 61, 71, 104) qui sont définis par lesdites membranes échangeuses d'ions,
lesdits compartiments de concentration étant constitués d'un premier à un n^{ième} compartiments de concentration du côté le plus en amont au côté le plus en aval par rapport audit compartiment de dessalage, et
**caractérisé en ce qu'**il comprend une ligne d'écoulement (36, 46, 53, 111) destinée à fournir une partie de la sortie dudit compartiment de dessalage audit n^{ième} compartiment de concentration.

19. Dispositif d'électrodésionisation selon la revendication 18, comprenant en outre :
une ligne d'écoulement destinée à évacuer une partie de la sortie à partir dudit premier compartiment de concentration et à faire circuler le reste de ladite sortie à l'intérieur dudit premier compartiment de concentration, et
une ligne d'écoulement destinée à fournir une partie de la sortie à partir du k^{ième} compartiment de concentration, où 2 ≤ k ≤ n, au (k-1) ^{ième} compartiment de concentration et à faire circuler le reste de ladite sortie dans le k^{ième} compartiment de concentration.

20. Dispositif d'électrodésionisation selon la revendication 18 comportant une pluralité de sous-dispositifs d'électrodésionisation connectés en série, le nombre de ladite pluralité de sous-dispositifs d'électrodésionisation étant n, n étant un nombre entier d'au moins 2, chacun desdits sous-dispositifs d'électrodésionisation comprenant :
au moins une anode,
au moins une cathode, et
des membranes échangeuses d'ions disposées entre ladite anode et ladite cathode,
des compartiments de concentration et au moins un compartiment de dessalage étant définis par lesdites membranes échangeuses d'ions,
une ligne d'écoulement destinée à fournir une partie de la sortie dudit compartiment de dessalage au compartiment de concentration du n^{ième} sous-dispositif d'électrodésionisation,
une ligne d'écoulement destinée à évacuer une partie de la sortie dudit compartiment de concentration dudit premier sous-dispositif d'électrodésionisation et à faire circuler le reste de ladite sortie à l'intérieur dudit compartiment de concentration dudit premier sous-dispositif d'électrodésionisation, et
une ligne d'écoulement destinée à fournir une partie de la sortie à partir dudit compartiment de concentration du k^{ième} sous-dispositif d'électrodésionisation, où 2 ≤ k ≤ n, au compartiment de concentration du (k-1)^{ième} sous-dispositif d'électrodésionisation et à faire circuler le reste de ladite sortie à l'intérieur dudit compartiment de concentration dudit k^{ième} sous-dispositif d'électrodésionisation.

21. Dispositif d'électrodésionisation selon la revendication 18 ou 19,
dans lequel lesdits compartiments de concentration sont disposés de telle sorte que ladite eau concentrée s'écoule dans lesdits compartiments de concentration le long d'une direction croisant la direction d'écoulement dans ledit compartiment de dessalage.
